# EUROPÄISCHE PATENTSCHRIFT

(11) **EP 3 671 142 B1**
(45) Veröffentlichungstag und Bekanntmachung des Hinweises auf die Patenterteilung: **09.11.2022**
(21) Anmeldenummer: 18214955.9
(22) Anmeldetag: 20.12.2018
(51) Int. Cl.: G01G 3/14, G01L 1/26

(54) **WÄGEZELLE UND WIEGEFUSS**
LOAD CELL AND WEIGHING FOOT
CELLULE DE PESAGE ET PIED DE PESAGE

(43) Veröffentlichungstag der Anmeldung: 24.06.2020
(73) Patentinhaber: Bizerba SE & Co. KG, 72336 Balingen (DE)
(72) Erfinder: Fritsch, Andreas, 72336 Balingen (DE); Schreiber, Annika, 72336 Balingen (DE); Eschment, Jens, 72406 Bisingen (DE); Metzger, Frank, 72461 Albstadt (DE)
(74) Vertreter: Manitz Finsterwald Patent- und Rechtsanwaltspartnerschaft mbB

(56) Entgegenhaltungen:
- EP-A1- 0 640 813
- EP-A2- 0 351 006
- EP-A2- 0 590 713
- EP-A2- 1 953 514
- WO-A1-00/73757

## Beschreibung

Die vorliegende Erfindung betrifft eine Wägezelle, insbesondere eines Wiegefußes. Die Wägezelle umfasst einen um eine Mittelachse rotationssymmetrisch ausgebildeten Federkörper mit einem äußeren Lagerring, einem nach oben abstehenden, inneren Krafteinleitungselement und einem ringförmigen Verformungsabschnitt, der als eine kreisringförmige, insbesondere unterhalb einer durch eine Oberseite des äußeren Lagerrings definierten Ebene verlaufende, Membran ausgebildet ist und über den der Lagerring und das Krafteinleitungselement fest miteinander verbunden sind, und mehrere, insbesondere zumindest vier oder genau vier, auf einer Unterseite der Membran angeordnete Dehnungsmessstreifen zur Erfassung einer streckenden und/oder stauchenden Verformung des Federkörpers, wobei die Dehnungsmessstreifen elektrisch zu einer Wheatstoneschen Messbrücke oder als Teil hiervon verschaltet sind, wobei zumindest ein erster Dehnungsmessstreifen, insbesondere zwei erste Dehnungsmessstreifen, auf einem ersten Kreis mit einem ersten Radius um die Mittelachse des Federkörpers und zumindest ein zweiter Dehnungsmessstreifen, insbesondere zwei zweite Dehnungsessstreifen, auf einem zweiten Kreis mit einem zweiten Radius, der größer ist als der erste Radius, um die Mittelachse des Federkörpers liegen.

Eine derartige Wägezelle, wie sie beispielsweise aus der EP 0 640 813 A1 bekannt ist, ist zum Einbau als Fuß in Lastträger wie z.B. Plattformen oder Behälter geeignet, z.B. in der Produktion/Fertigung, im Lager, im Versand oder im Verkauf, und daher zur Gewichtserfassung von unterschiedlichem Wägegut geeignet. Da die lokale Dehnung der Membran einer derartigen Wägezelle bei Einwirken einer Kraft radiusabhängig variiert und diese Variation zusätzlich von dem auf die Wägezelle einwirkenden Gewicht abhängig ist, ist die Bestimmung des Gewichtswerts aus der resultierenden Brückenspannung der Wheatstoneschen Messbrücke aufgrund der in unterschiedlichen Abständen zu der Mittelachse angeordneten Dehnungsmessstreifen vergleichsweise komplex und nur innerhalb vorgegebener Fehlergrenzen möglich.

Eine Wägezelle mit den Merkmalen des Oberbegriffs des Anspruchs 1 ist aus dem Dokument EP 0 590 713 A2 oder dem Dokument EP 0 351 006 A2 bekannt.

Der Erfindung liegt die Aufgabe zugrunde, eine Wägezelle der eingangs genannten Art anzugeben, die eine höhere Genauigkeit aufweist.

Diese Aufgabe wird durch eine Wägezelle mit den Merkmalen des Anspruchs 1 gelöst.

Hierdurch wird ermöglicht, die Dehnung der Membran im Bereich des ersten Radius, d.h. im Bereich des oder der inneren Dehnungsmessstreifen, an die Dehnung der Membran im Bereich des zweiten Radius, d.h. im Bereich des oder der äußeren Dehnungsmessstreifen, anzupassen. Bei Belastung der Wägezelle mit einem Gewicht unterliegen damit der oder die inneren Dehnungsmessstreifen, insbesondere betragsmäßig, zumindest im Wesentlichen derselben Dehnung wie der oder die äußeren Dehnungsmessstreifen. Dieses Verhalten kann auf die Verhältnisse aus Flächenträgheitsmoment und Abstand des jeweiligen Bereichs von der Krafteinleitung zurückgeführt werden. Anders ausgedrückt hat sich herausgestellt, dass ein analoges Dehnungsverhalten in den beiden Bereichen dann erreicht wird, wenn die Membran in den beiden Bereichen zumindest in etwa gleich viel Material aufweist. Um dies zu erreichen, wird der größere Umfang bei dem größeren Radius durch eine geringe Dicke bei dem größeren Radius ausgeglichen. Hierdurch kann die Genauigkeit der Wägezelle erhöht werden. Die mittlere Dicke im Bereich des oder der ersten Dehnungsmessstreifen ist die mittlere Dicke über die radiale Erstreckung des oder der ersten Dehnungsmessstreifen. Die mittlere Dicke im Bereich des oder der zweiten Dehnungsmessstreifen ist die mittlere Dicke über die radiale Erstreckung des oder der zweiten Dehnungsmessstreifen.

Sofern lediglich ein erster Dehnungsmessstreifen und lediglich ein zweiter Dehnungsmessstreifen vorgesehen sind, ist die Wheatstonesche Messbrücke als Halbbrücke ausgebildet, bei zwei ersten Dehnungsmessstreifen und zwei zweiten Dehnungsmessstreifen als Vollbrücke. Bevorzugt handelt es sich bei dem oder den ersten Dehnungsmessstreifen um zugbeanspruchte Dehnungsmessstreifen, d.h. um Dehnungsmessstreifen, die eine Streckung der Membran erfassen, und bei dem oder den zweiten Dehnungsmessstreifen um druckbeanspruchte Dehnungsmessstreifen, d.h. um Dehnungsmessstreifen, die eine Stauchung der Membran erfassen.

Insbesondere ist die kreisringförmige Membran an ihrer Unterseite eben ausgebildet. Darüber hinaus ist es besonders bevorzugt, wenn die kreisförmige Membran an ihrer Oberseite in ihrem Übergangsbereich zu dem äußeren Lagerring einen gerundeten Verlauf aufweist. Es hat sich herausgestellt, dass durch einen derart sanften Übergang eine besonders hohe Genauigkeit der Wägezelle erreicht werden kann. Ferner kann die kreisförmige Membran an ihrer Oberseite auch in ihrem Übergangsbereich zu dem inneren Krafteinleitungselement einen gerundeten Verlauf aufweisen.

Darüber hinaus kann vorgesehen sein, dass das innere Krafteinleitungselement an seinem unteren Ende einen Hinterschnitt aufweist. Hierdurch wird erreicht, dass die Krafteinleitung möglichst nahe an der Mittelachse des Federkörpers erfolgt. Es hat sich herausgestellt, dass hierdurch eine besonders hohe Genauigkeit der Wägezelle erreicht wird.

Bevorzugt ist die Dicke der Membran von innen nach außen monoton abnehmend, insbesondere linear oder stufenförmig abnehmend, ausgebildet. Eine derart ausgebildete Membran ist besonders einfach herstellbar. Darüber hinaus steigt die Fertigungstoleranz.

Gemäß einer hierzu alternativen Ausführungsform nimmt die Dicke der Membran im Bereich des oder der ersten Dehnungsmessstreifen von innen nach außen ab und nimmt die Dicke im Bereich des oder der zweiten Dehnungsmessstreifen von innen nach außen zu. Es hat sich herausgestellt, dass hierdurch eine besonders hohe Genauigkeit der Wägezelle erreicht wird.

Ferner ist es vorgesehen, dass der oder die ersten Dehnungsmessstreifen mit dem inneren Krafteinleitungselement und der oder die zweiten Dehnungsmessstreifen mit dem äußeren Lagerring überlappend angeordnet sind, da hierdurch möglichst lineare Widerstands-/Belastungskennlinien für die Dehnungsmessstreifen erzielt werden, wodurch die Genauigkeit der Wägezelle erhöht werden kann.

Die mehreren Dehnungsmessstreifen können jeweils ein in radialer Richtung orientiertes Messgitter aufweisen, d.h. Messrichtung der Dehnungsmessstreifen ist jeweils in radialer Richtung ausgerichtet. Dies erhöht die Symmetrie der Anordnung und vereinfacht die Auswertung des Brückensignals der Wheatstoneschen Messbrücke.

Gemäß einer Ausführungsform können auf zwei einander gegenüberliegenden Seiten des Krafteinleitungselements jeweils ein erster und ein zweiter Dehnungsmessstreifen angeordnet sein. Durch die hiermit verbundene Symmetrie ist die Wheatstonesche Messbrücke weniger anfällig für zumindest bestimmte Abweichungen in der Fertigung, da sich diese dann gegenseitig zumindest teilweise ausgleichen können. Darüber hinaus sind die Dehnungsmessstreifen in dieser Anordnung besonders einfach auf die Membran aufbringbar.

Erfindungsgemäß sind die zwei ersten Dehnungsmessstreifen entlang einer ersten Linie durch die Mittelachse des Federkörpers und die zwei zweiten Dehnungsmessstreifen entlang einer zweiten Linie durch die Mittelachse des Federkörpers angeordnet, wobei die beiden Linien um einen Winkel im Bereich von 5° bis 20° gegeneinander verdreht sind. Hierdurch wird ermöglicht, die beiden jeweils auf derselben Seite angeordneten Dehnungsmessstreifen besonders nah aneinander zu platzieren, so dass die eingesetzte Membran besonders kompakt ausgebildet sein kann.

Darüber hinaus kann die Membran oberseitig und in einem Mittenbereich mit einem umlaufenden Ringsteg versehen sein. Die Dehnungsmessstreifen werden bevorzugt an einer Stelle angeordnet, an der bei einer Krafteinleitung eine möglichst starke Streckung bzw. Stauchung des Federkörpers auftritt, um ein möglichst hohes Signal zu erzeugen. Durch den umlaufenden Ringsteg kann die Breite der Stelle, an der die größte Streckung bzw. Stauchung des Federkörpers auftritt, vergrößert werden. Der Ringsteg, der kein Bestandteil der Membran ist, kann sich auch bis nach oberhalb der durch die Oberseite des äußeren Lagerrings definierten Ebene erstrecken.

Darüber hinaus kann die Wägezelle eine mit den Dehnungsmessstreifen elektrisch verbundene Auswerteschaltung umfassen, die dazu ausgebildet ist, ein einem auf das Krafteinleitungselement einwirkenden Gewicht entsprechendes Ausgangssignal zu erzeugen, wobei bevorzugt die Auswerteschaltung an dem Krafteinleitungselement vorgesehen ist. Dabei kann eine mit der Auswerteschaltung elektrisch verbundene externe Schnittstelle vorgesehen sein, die dazu ausgebildet ist, das von der Auswerteschaltung erzeugte Ausgangssignal nach extern auszugeben, wobei bevorzugt die externe Schnittstelle an dem Krafteinleitungselement vorgesehen ist.

Das Krafteinleitungselement kann als ein Krafteinleitungsrohr ausgebildet sein. Im Inneren des Krafteinleitungsrohrs können dann die vorgenannte Auswerteschaltung und/oder die vorgenannte externe Schnittstelle angeordnet sein. Insbesondere kann das Innere des Krafteinleitungsrohrs eine Kabelführung bilden.

Besonders bevorzugt ist es, wenn der Federkörper monolithisch, insbesondere als Drehteil, ausgebildet ist. Der Federkörper ist damit kein komplexes Bauteil aus mehreren Einzelteilen. Der Federkörper ist damit vergleichsweise einfach herstellbar.

Die vorliegende Erfindung betrifft ferner einen Wiegefuß mit einer Wägezelle, wie sie vorstehend beschrieben ist.

Dabei ist es besonders bevorzugt, wenn das Krafteinleitungselement an seinem oberen Ende ein Außengewinde aufweist. Dadurch kann der Wiegefuß einfach, insbesondere auch nachträglich, an beliebige Lastträger wie Lastplatten, Paletten, Kisten, Regale, Regaleinsätze, Tischfüße oder dergleichen geschraubt werden.

Vorzugsweise umfasst der Wiegefuß ein insbesondere kugelsegmentförmiges Unterteil, auf dem sich der äußere Lagerring der Wägezelle abstützt. Dabei ist es bevorzugt, wenn zum Schutz gegen Fremdkörper und Wasser das Unterteil den Verformungsabschnitt nach unten hin hermetisch dicht verschließt.

Darüber hinaus betrifft die vorliegende Erfindung ein Wägesystem mit mehreren, insbesondere zwei oder vier, Wiegefüßen, wie sie vorstehend beschrieben sind, und mit einem auf den mehreren Wiegefüßen abgestützten Lastträger.

Weitere vorteilhafte Ausgestaltungen der Erfindung sind in den Ansprüchen, der Figurenbeschreibung und der Zeichnung beschrieben.

Die Erfindung wird im Folgenden beispielhaft unter Bezugnahme auf die Zeichnung beschrieben. Es zeigen,
- Fig. 1: einen erfindungsgemäßen Wiegefuß in einer perspektivischen Ansicht,
- Fig. 2: einen Federkörper im Querschnitt,
- Fig. 3: eine Teilansicht des Federkörpers aus Fig. 2 bei einwirkender Gewichtsbelastung,
- Fig. 4: den Federkörper aus Fig. 2 mit an der Unterseite angebrachten Dehnungsmessstreifen,
- Fig. 5A: eine Ansicht von unten auf den Federkörper gemäß Fig. 4, wobei die Dehnungsmesstreifen eine erste, nicht erfindungsgemäße Anordnung aufweisen,
- Fig. 5B: den Federkörper aus Fig. 2, wobei die Dehnungsmesstreifen jedoch eine zweite, erfindungsgemäße Anordnung aufweisen,
- Fig. 6: den Federkörper aus Fig. 2, der oberseitig zusätzlich mit einem umlaufenden Ringsteg versehen ist,
- Fig. 7: einen Federkörper gemäß einer weiteren Ausführungsform im Querschnitt,
- Fig. 8: ein erfindungsgemäßes Wägesystem, und
- Fig. 9: ein weiteres erfindungsgemäßes Wägesystem.

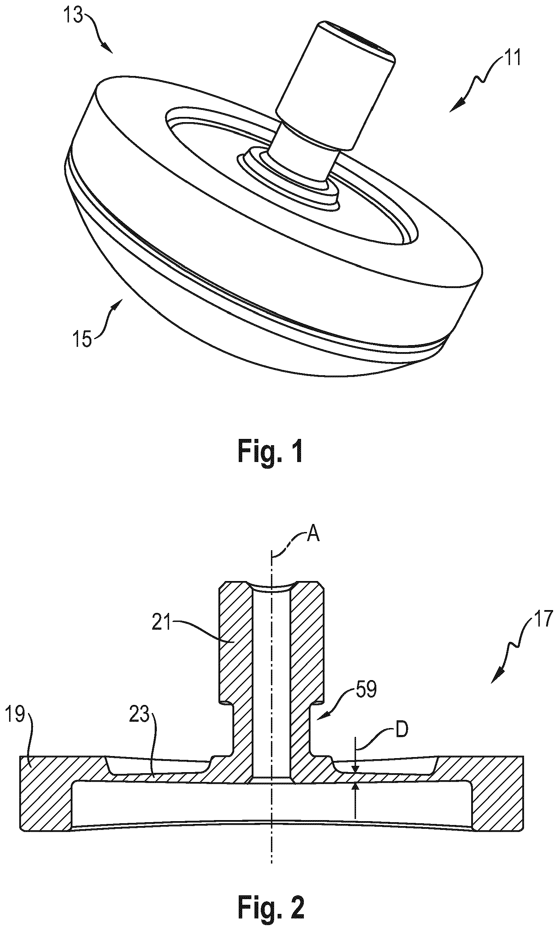

Der in Fig. 1 dargestellte erfindungsgemäße Wiegefuß 11 umfasst eine erfindungsgemäße Wägezelle 13 und ein als Vollkörper ausgebildetes kugelsegmentförmiges Unterteil 15, auf dem sich die Wägezelle 13 abstützt. Die Wägezelle 13 umfasst einen monolithisch und um eine Mittelachse A rotationssymmetrisch ausgebildeten Federkörper 17 (vgl. Fig. 2). Der Federkörper 17 umfasst einen äußeren Lagerring 19 und ein nach oben abstehendes, inneres Krafteinleitungselement 21. Der äußere Lagerring 19 und das innere Krafteinleitungselement 21 sind über einen ringförmigen Verformungsabschnitt 23 fest miteinander verbunden. Die Verbindung zwischen der Wägezelle 13 und dem Unterteil 15 ist dabei derart, dass sich die Wägezelle 13 über den äußeren Lagerring 19 auf dem Unterteil 15 abstützt und der Verformungsabschnitt 23 durch das Unterteil 15 nach unten hin hermetisch dicht verschlossen wird.

Der ringförmige Verformungsabschnitt 23 ist als eine kreisringförmige Membran 23 ausgebildet. Das innere Krafteinleitungselement 21 ist als ein vertikal orientiertes Krafteinleitungsrohr 21 ausgebildet, an dessen oberen Ende ein Außengewinde vorgesehen ist, über das der Wiegefuß 11 von unten in einen Lastträger eingeschraubt werden kann.

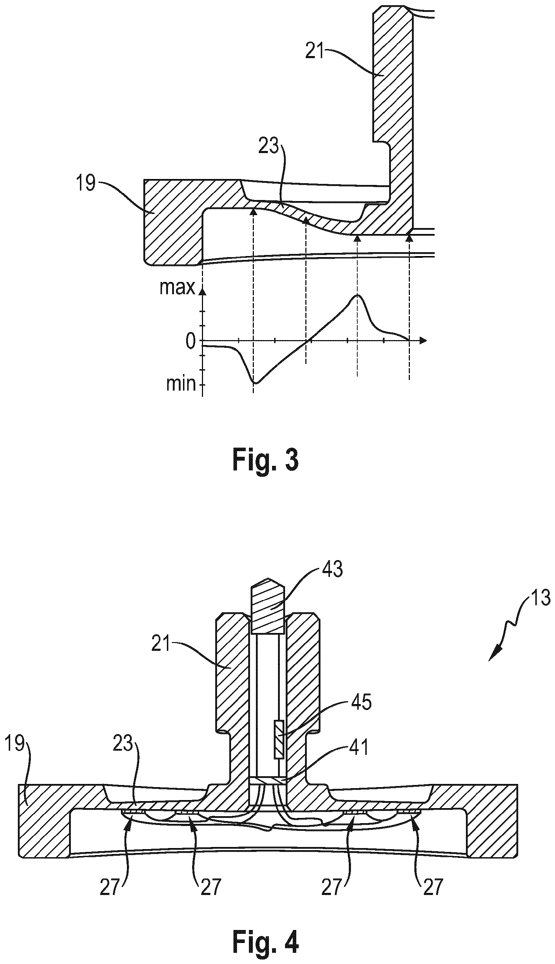

Wirkt über das Krafteinleitungsrohr 21 eine Gewichtskraft auf den Federkörper 17 ein, bewegt sich das Krafteinleitungsrohr 21, insbesondere relativ zu dem feststehenden äußeren Lagerring 19, geringfügig vertikal nach unten, wobei sich die Membran 23 des Federkörpers 17 in der in Fig. 3 gezeigten Art verformt. In der unteren Hälfte der Fig. 3 ist ein Diagramm dargestellt, das die Dehnungsverteilung des Federkörpers 17, d.h. die Dehnung des Federkörpers 17 abhängig von der jeweiligen radialen Position, zeigt. Wie sich aus diesem Diagramm anhand des dargestellten Maximums bzw. Minimums der die Dehnungsverteilung darstellenden Kurve ergibt, erfährt die Unterseite des Federkörpers 17 bei Belastung im Bereich des Übergangs zu dem Krafteinleitungsrohr 21 eine Streckung (positive Dehnung) und im Bereich des Übergangs zu dem äußeren Lagerring 19 eine Stauchung (negative Dehnung). Zwischen dem Maximum und dem Minimum besitzt die dargestellte Kurve eine Nullstelle.

Diese Verformung des Federkörpers 17 kann über vier, auf die eben ausgebildete Unterseite der Membran 23 aufgebrachte, insbesondere in den beiden vorgenannten Bereichen angeordnete, Dehnungsmessstreifen 27, deren elektrischer Widerstand sich in Abhängigkeit von der Dehnung ändert, detektiert werden (vgl. Fig. 4), wobei auf zwei einander gegenüberliegenden Seiten des Krafteinleitungsrohrs 21 jeweils zwei Dehnungsmessstreifen 27 angeordnet sind. Wie sich aus einem Vergleich mit Fig. 3 ergibt, handelt es sich bei den beiden innen liegenden Dehnungsmessstreifen 27 um zugbeanspruchte Dehnungsmessstreifen, die eine Streckung der Membran 23 erfassen, und bei den beiden außen liegenden Dehnungsmessstreifen 27 um druckbeanspruchte Dehnungsmessstreifen, die eine Stauchung der Membran 27 erfassen.

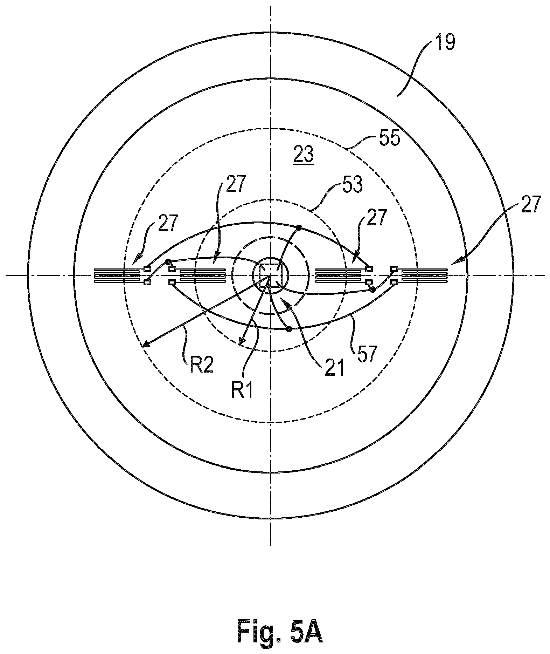

Wie in Fig. 5A näher dargestellt ist, sind die vier Dehnungsmessstreifen 27 über Bond-Drähte 57 (von denen der Übersichtlichkeit halber lediglich einer mit einem Bezugszeichen versehen ist) elektrisch zu einer Wheatstoneschen Vollbrücke verschaltet, wobei die Messgitter der Dehnungsmessstreifen 27 jeweils in radialer Richtung orientiert sind, d.h. Messrichtung der Dehnungsmessstreifen 27 liegt jeweils in radialer Richtung. Die beiden inneren, zugbeanspruchten Dehnungsmessstreifen 27 liegen auf einem ersten Kreis 53 mit einem ersten Radius R1, und die beiden äußeren, druckbeanspruchten Dehnungsmessstreifen 27 liegen auf einem zweiten Kreis 55 mit einem größerem zweiten Radius R2. Die vier Dehnungsmessstreifen 27 sind dabei entlang einer gemeinsamen Linie durch die Mittelachse A des Federkörpers 17 angeordnet. Durch die Linienanordnung der Dehnungsmessstreifen 27 und die hiermit verbundene Symmetrie kann die Fertigungstoleranz erhöht werden, da sich dann zumindest bestimmte Fertigungsabweichungen gegenseitig ausgleichen können.

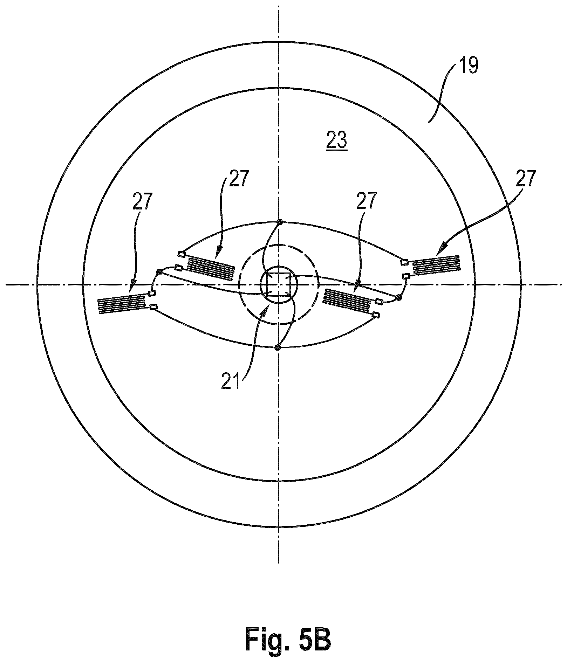

Aus Fig. 5B ist ersichtlich, wie die Dehnungsmessstreifen 27 erfindungsgemäß von der Linienanordnung gemäß Fig. 5A abweichend platziert werden, sodass die beiden inneren Dehnungsmessstreifen 27 entlang einer ersten Linie und die beiden äußeren Dehnungsmessstreifen 27 entlang einer zweiten Linie durch die Mittelachse A des Federkörpers 17 angeordnet sind, wobei die beiden Linien um einen Winkel von 5° bis 20° gegeneinander verdreht sind. Hierdurch wird ermöglicht, den radialen Abstand der beiden auf einer Seite nebeneinander angeordneten Dehnungsmessstreifen 27 zu verringern, so dass ein Federkörper 17 mit geringerem Durchmesser gewählt werden kann, wodurch die Wägezelle 13 kompakter gestaltet werden kann. Der im Zusammenhang mit der Linienanordnung gemäß Fig. 5A genannte Vorteil der höheren Fertigungstoleranz bleibt dabei, d.h. bei geringfügig abweichender Platzierung, großteils erhalten.

Wie insbesondere aus der Fig. 2 erkennbar ist, ist die mittlere Dicke D der kreisringförmigen Membran 23 im Bereich des kleineren ersten Radius R1, d.h. bei den beiden inneren Dehnungsmessstreifen 27, größer ist als im Bereich des zweiten Radius R2, d.h. bei den beiden äußeren Dehnungsmessstreifen 27. Hierdurch wird ermöglicht, dass in beiden Bereichen betragsmäßig gleiche bzw. zumindest ähnliche Dehnungen erhalten werden, so dass die Widerstands-/Belastungskennlinien der beiden inneren Dehnungsmesstreifen 27 einerseits und die Widerstands-/Belastungskennlinien der beiden äußeren Dehnungsmessstreifen 27 andererseits - trotz unterschiedlicher Radien - betragsmäßig einander zumindest im Wesentlichen entsprechen. Hierdurch wird die Auswertung der Brückenspannung der Brückenschaltung erleichtert und die Genauigkeit der Wägezelle 13 erhöht.

Die größere Dicke der Membran 23 weiter innen im Vergleich zu weiter außen lässt sich durch die Verhältnisse aus Flächenträgheitsmoment und Abstand des jeweiligen Bereichs zu der Krafteinleitung begründen. Veranschaulicht bzw. vereinfacht formuliert ist im Bereich des größeren zweiten Radius R2 aufgrund des größeren Umfangs eine geringe Dicke erforderlich, um auf dasselbe Materialvolumen und damit ein analoges Dehnungsverhalten zu kommen wie im Bereich des kleineren ersten Radius R2 mit dem kleineren Umfang.

Gemäß der dargestellten Ausführungsform nimmt die Dicke der Membran 23 von innen nach außen monoton ab, insbesondere linear ab. Eine derartige Membran 23 ist besonders einfach herstellbar. Grundsätzlich sind jedoch auch andere Übergänge von der größeren inneren Dicke zu der geringeren äußeren Dicke denkbar, beispielsweise eine stufenförmige Abnahme.

An ihrer Oberseite weist die kreisringförmige Membran 23 in ihrem Übergangsbereich zu dem äußeren Lagerring 19 und in ihrem Übergangsbereich zu dem inneren Krafteinleitungselement 21 jeweils einen gerundeten Verlauf auf. Darüber hinaus weist das innere Krafteinleitungselement 21 an seinem unteren Ende einen Hinterschnitt 59 auf, so dass die Krafteinleitung möglichst nahe an der Mittelachse A des Federkörpers 17 erfolgt. Hierdurch kann die Genauigkeit der Wägezelle 13 jeweils deutlich weiter verbessert werden.

Die Dehnungsmessstreifen 27 sind elektrisch mit einer Auswerteschaltung 41 verbunden (vgl. Fig. 4), die in an sich bekannter Weise aus der Brückenspannung der zu der Vollbrücke verschalteten Dehnungsmessstreifen 27 das auf die Wägezelle 13 jeweils einwirkende Gewicht berechnet und ein entsprechendes Ausgangssignal erzeugt. Die Auswerteschaltung 41 ist dabei innerhalb des Krafteinleitungsrohrs 21 angeordnet.

Wie in Fig. 4 dargestellt ist, kann das Ausgangssignal der Auswerteschaltung 41 beispielsweise über einen Stecker 43, der mit der Auswertschaltung 41 elektrisch verbunden ist, nach extern, insbesondere einen Lastträger, wie er vorstehend und nachstehend beschrieben ist, ausgegeben werden. Der Stecker 43 ist dabei innerhalb des Krafteinleitungsrohrs 21 angeordnet. Wenn der Wiegefuß 11 über das Krafteinleitungsrohr 21 bzw. dessen Außengewinde von unten in einen Lastträger eingeschraubt ist, hat dies den Vorteil, dass das Ausgangssignal unmittelbar und auf kürzestem Weg an den Lastträger bzw. ein Wägeterminal des Lastträgers ausgegeben und dort angezeigt werden kann, ohne dass hierfür zusätzlich externe Kabel oder dergleichen erforderlich sind, wie dies der Fall wäre, wenn das Ausgangssignal lagerringseitig nach extern ausgegeben werden würde. Als weiteres Mittel zur externen Ausgabe des Ausgangssignals kommen im Übrigen auch andere externe Schnittstellen, insbesondere kontaktlose Mittel wie etwa ein Transmitter, der beispielsweise auf dem NFC-Standard basieren kann, in Frage.

Insbesondere bei einer kontaktlosen Ausbildung der Schnittstelle zwischen Wiegefuß 11 und Lastträger kann vorgesehen sein, dass ein interner elektrischer Energiespeicher 45 wie z.B. eine Batterie vorgesehen ist, um die Wägezelle 13 bzw. den Wiegefuß 11 unabhängig von einer externen Energieversorgung, d.h. autark, auszubilden. Der elektrische Energiespeicher 45 ist bevorzugt dann ebenfalls innerhalb des Krafteinleitungsrohrs 21 angeordnet.

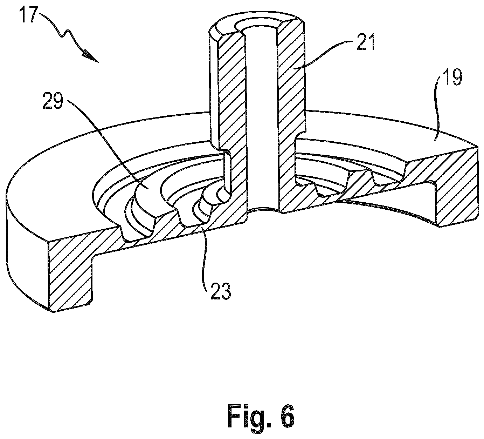

In Fig. 6 ist eine weitere Ausführungsform eines Federkörpers 17 dargestellt. Gegenüber dem Federkörper 17 gemäß den Fig. 1 bis 4 ist die Membran 23 des Federkörpers 17 gemäß Fig. 6 an ihrer Oberseite mit einem umlaufenden Ringsteg 29 versehen, der in radialer Richtung zumindest im Wesentlichen mittig der Membran 23 angeordnet ist. Es hat sich herausgestellt, dass hierdurch die Breite des Maximums und die Breite des Minimums der in Fig. 3 dargestellten Dehnungsverteilung des Federkörpers 17 vergrößert werden kann. Die Fertigungstoleranz kann dadurch erhöht werden. Darüber hinaus hat sich herausgestellt, dass es insbesondere bei Vorhandensein des Ringstegs 29 vorteilhaft sein kann, wenn die beiden inneren Dehnungsmessstreifen 27 mit dem inneren Krafteinleitungsrohr 21 und die beiden äußeren Dehnungsmessstreifen 27 mit dem äußeren Lagerring 19 überlappend angeordnet sind, um möglichst lineare Abhängigkeiten der relativen Widerstandsänderungen von der Dehnung zu erhalten, um die Genauigkeit der Wägezelle 13 zu erhöhen.

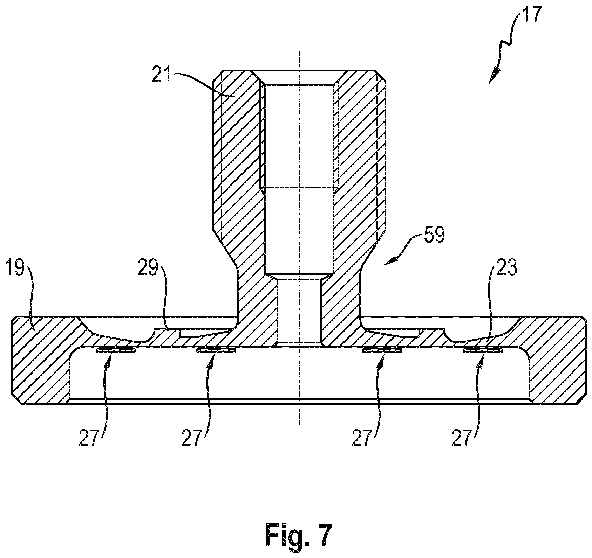

In Fig. 7 ist ein weiterer Federkörper 17 in etwas anderer Ausführung dargestellt. Der Federkörper 17 gemäß Fig. 7 unterscheidet sich von dem Federkörper 17 gemäß Fig. 2 dadurch, dass die Dicke der Membran 23 im Bereich der beiden inneren Dehnungsmessstreifen 27 von innen nach außen abnimmt und im Bereich der beiden äußeren Dehnungsmessstreifen 27 von innen nach außen zunimmt. Die mittlere Dicke D der Membran 23 im Bereich der beiden inneren Dehnungsmessstreifen 27 ist dabei aber weiterhin - und damit erfindungsgemäß - größer als die mittlere Dicke D der Membran 23 im Bereich der beiden äußeren Dehnungsmessstreifen 27. Darüber hinaus ist der umlaufende Ringsteg 29 im Unterschied zu der Ausführungsform gemäß Fig. 6 weniger hoch ausgebildet.

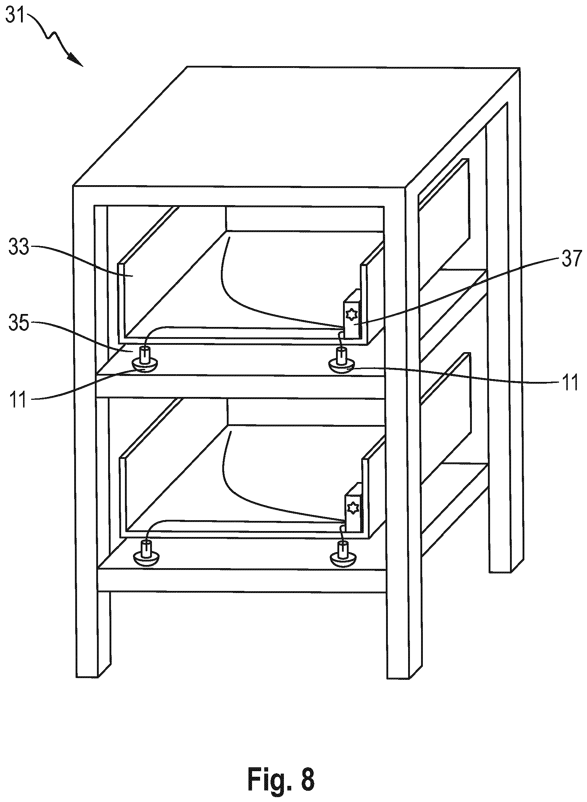

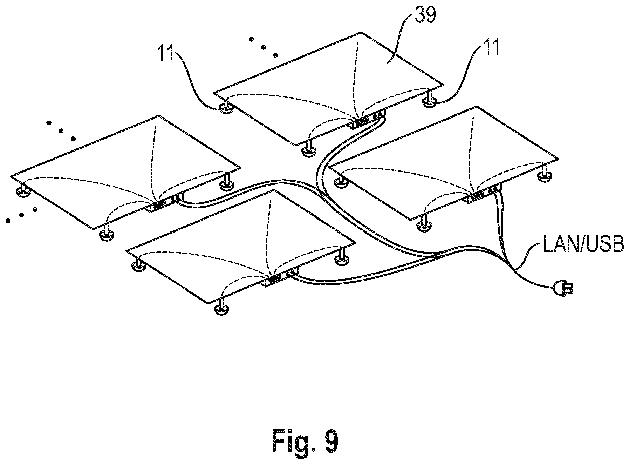

Die Fig. 8 und 9 zeigen zwei verschiedene Anwendungen des erfindungsgemäßen Wiegefußes 11. In Fig. 8 ist ein Supermarkt-Regal 31 mit beispielhaft zwei Regaleinsätzen 33 gezeigt, die jeweils über z.B. vier Wiegefüße 11 auf einem Regalboden 35 aufgestellt sind. Durch eine jeweilige Überwachungseinrichtung 37, die mit sämtlichen Wiegefüßen 11 des jeweiligen Regaleinsatzes 33 verbunden ist, kann das Gesamtgewicht des jeweiligen Regaleinsatzes 33 einschließlich der sich darin befindlichen Waren, beispielsweise Brot, bestimmt werden. Hierdurch kann der "Füllstand" des Regaleinsatzes 33 überwacht werden. Fällt das Gesamtgewicht des Regaleinsatzes 33 unter einen vorbestimmten Wert, d.h. kann beispielsweise eine in die Überwachungseinrichtung 37 integrierte oder separat hiervon ausgebildete Anzeige aufleuchten, um diesen Zustand anzuzeigen. In Fig. 9 sind mehrere Plattformen 39, beispielsweise Paletten, gezeigt, wie sie z.B. in einem Warenlager vorkommen können. Die Plattformen 39 stützen sich jeweils auf vier Wiegefüßen 11 ab, um das Gesamtgewicht der jeweiligen Plattform 39 einschließlich der darauf angeordneten Ware zu bestimmen. Ist auf sämtlichen Plattformen 39 die gleiche Ware gestapelt, können die Gesamtgewichte aller Plattformen kabelgebunden oder kabellos, z.B. per WLAN, zusammengeführt werden, wodurch eine permanente Bestandsaufnahme der jeweiligen Ware möglich ist.

### Bezuqszeichenliste

- 11: Wiegefuß
- 13: Wägezelle
- 15: Unterteil
- 17: Federkörper
- 19: Lagerring
- 21: Krafteinleitungsrohr
- 23: Membran
- 27: Dehnungsmessstreifen
- 29: Ringsteg
- 31: Regal
- 33: Regaleinsatz
- 35: Regalboden
- 37: Überwachungseinrichtung
- 39: Plattform
- 41: Auswerteschaltung
- 43: Stecker
- 45: elektrischer Energiespeicher
- 53: erster Kreis
- 55: zweiter Kreis
- 57: Bond-Draht
- 59: Hinterschnitt

- A: Mittelachse
- D: Dicke
- R1: erster Radius
- R2: zweiter Radius

## Patentansprüche

1. Wägezelle (13) umfassend
einen um eine Mittelachse (A) rotationssymmetrisch ausgebildeten Federkörper (17) mit einem äußeren Lagerring (19), einem nach oben abstehenden, inneren Krafteinleitungselement (21) und einem ringförmigen Verformungsabschnitt (23), der als eine kreisringförmige Membran (23) ausgebildet ist und über den der Lagerring (19) und das Krafteinleitungselement (21) fest miteinander verbunden sind, und
mehrere auf einer Unterseite der Membran (23) angeordnete Dehnungsmessstreifen (27) zur Erfassung einer streckenden und/oder stauchenden Verformung des Federkörpers (17), wobei die Dehnungsmessstreifen (27) elektrisch zu einer Wheatstoneschen Messbrücke oder als Teil hiervon verschaltet sind,
wobei zumindest ein erster Dehnungsmessstreifen (27), insbesondere zwei erste Dehnungsmessstreifen (27), auf einem ersten Kreis (53) mit einem ersten Radius (R1) um die Mittelachse (A) des Federkörpers (17) und zumindest ein zweiter Dehnungsmessstreifen (27), insbesondere zwei zweite Dehnungsessstreifen (27), auf einem zweiten Kreis (55) mit einem zweiten Radius (R2), der größer ist als der erste Radius (R1), um die Mittelachse (A) des Federkörpers (17) liegen,
wobei die mittlere Dicke (D) der kreisringförmigen Membran (23) im Bereich des oder der ersten Dehnungsmessstreifen (27) größer ist als die mittlere Dicke im Bereich des oder der zweiten Dehnungsmessstreifen (27),
**dadurch gekennzeichnet, dass**
die zwei ersten Dehnungsmessstreifen (27) entlang einer ersten Linie durch die Mittelachse (A) des Federkörpers (17) und die zwei zweiten Dehnungsmessstreifen (27) entlang einer zweiten Linie durch die Mittelachse (A) des Federkörpers (17) angeordnet sind, wobei die beiden Linien um einen Winkel von 5° bis 20° gegeneinander verdreht sind.

2. Wägezelle nach Anspruch 1,
**dadurch gekennzeichnet, dass**
die kreisringförmige Membran (23) an ihrer Unterseite eben ausgebildet ist und/oder an ihrer Oberseite in ihrem Übergangsbereich zu dem äußeren Lagerring (19) und/oder in ihrem Übergangsbereich zu dem inneren Krafteinleitungselement (21), insbesondere jeweils, einen gerundeten Verlauf aufweist.

3. Wägezelle nach Anspruch 1 oder 2,
**dadurch gekennzeichnet, dass**
das innere Krafteinleitungselement (21) an seinem unteren Ende einen Hinterschnitt (59) aufweist.

4. Wägezelle nach zumindest einem der vorstehenden Ansprüche,
**dadurch gekennzeichnet, dass**
die Dicke (D) der Membran (23) von innen nach außen monoton abnehmend, insbesondere linear oder stufenförmig abnehmend, ausgebildet ist.

5. Wägezelle nach zumindest einem der Ansprüche 1 bis 3,
**dadurch gekennzeichnet, dass**
die Dicke (D) der Membran (23) im Bereich des oder der ersten Dehnungsmessstreifen (27) von innen nach außen abnimmt und im Bereich des oder der zweiten Dehnungsmessstreifen (27) von innen nach außen zunimmt.

6. Wägezelle nach zumindest einem der vorstehenden Ansprüche,
**dadurch gekennzeichnet, dass**
die mehreren Dehnungsmessstreifen (27) jeweils ein in radialer Richtung orientiertes Messgitter aufweisen.

7. Wägezelle nach zumindest einem der vorstehenden Ansprüche,
**dadurch gekennzeichnet, dass**
auf zwei einander gegenüberliegenden Seiten des Krafteinleitungselements (21) jeweils ein erster und ein zweiter Dehnungsmessstreifen (27) angeordnet sind.

8. Wägezelle nach zumindest einem der vorstehenden Ansprüche,
**dadurch gekennzeichnet, dass**
die Membran (23) oberseitig in einem Mittenbereich mit einem umlaufenden Ringsteg (29) versehen ist.

9. Wägezelle nach zumindest einem der vorstehenden Ansprüche,
**dadurch gekennzeichnet, dass**
die Wägezelle (13) eine mit den Dehnungsmessstreifen (27) elektrisch verbundene Auswerteschaltung (41) umfasst, die dazu ausgebildet ist, ein einem auf das Krafteinleitungselement einwirkenden Gewicht entsprechendes Ausgangssignal zu erzeugen, wobei bevorzugt eine mit der Auswerteschaltung (41) elektrisch verbundene externe Schnittstelle (43) vorgesehen ist, die dazu ausgebildet ist, das von der Auswerteschaltung (41) erzeugte Ausgangssignal nach extern auszugeben.

10. Wägezelle nach zumindest einem der vorstehenden Ansprüche,
**dadurch gekennzeichnet, dass**
das Krafteinleitungselement (21) als ein Krafteinleitungsrohr (21) und/oder der Federkörper (17) monolithisch ausgebildet ist.

11. Wiegefuß (11) mit einer Wägezelle (13) nach einem der vorstehenden Ansprüche.

12. Wiegefuß nach Anspruch 11,
**dadurch gekennzeichnet, dass**
das Krafteinleitungselement (21) an seinem oberen Ende ein Außengewinde aufweist.

13. Wiegefuß nach Anspruch 11 oder 12,
**dadurch gekennzeichnet, dass**
der Wiegefuß (11) ein Unterteil (15) umfasst, auf dem sich der äußere Lagerring (19) der Wägezelle (13) abstützt, wobei bevorzugt das Unterteil (15) den Verformungsabschnitt (23) nach unten hin hermetisch dicht verschließt.

14. Wägesystem mit mehreren, insbesondere zwei oder vier, Wiegefüßen (11) jeweils nach einem der vorstehenden Ansprüche 11 bis 13 und mit einem auf den mehreren Wiegefüßen (11) abgestützten Lastträger (33, 39).

## Claims

1. A load cell (13) comprising
a spring body (17) formed rotationally symmetrically about a center axis (A) and having an outer support ring (19), having an upwardly projecting inner force introduction element (21), and having an annular deformation section (23) which is formed as an annular membrane (23) and via which the support ring (19) and the force introduction element (21) are fixedly connected to one another; and
a plurality of strain gauges (27) arranged on a lower side of the membrane (23) for detecting a stretching and/or compressive deformation of the spring body (17), with the strain gauges (27) being electrically connected to form a Wheatstone bridge or as a part thereof,
wherein at least one first strain gauge (27), in particular two first strain gauges (27), is/are disposed on a first circle (53) having a first radius (R1) about the center axis (A) of the spring body (17) and at least one second strain gauge (27), in particular two second strain gauges (27), is/are disposed on a second circle (55) having a second radius (R2), which is greater than the first radius (R1), about the center axis (A) of the spring body (17),
wherein the mean thickness (D) of the annular membrane (23) in the region of the first strain gauge or gauges (27) is larger than the mean thickness in the region of the second strain gauge or gauges (27),
**characterized in that**
the two first strain gauges (27) are arranged along a first line through the center axis (A) of the spring body (17) and the two second strain gauges (27) are arranged along a second line through the center axis (A) of the spring body (27), with the two lines being rotated with respect to one another by an angle from 5° to 20°.

2. A load cell in accordance with claim 1,
**characterized in that**
the annular membrane (23) is formed as planar at its lower side and/or has a rounded extent at its upper side in its transition region to the outer support ring (19) and/or has a rounded extent in its transition region to the inner force introduction element (21), in particular in each case.

3. A load cell in accordance with claim 1 or claim 2,
**characterized in that**
the inner force introduction element (21) has an undercut (59) at its lower end.

4. A load cell in accordance with at least one of the preceding claims,
**characterized in that**
the thickness (D) of the membrane (23) monotonously decreases from the inside to the outside, in particular reducing linearly or in a stepped manner.

5. A load cell in accordance with at least one of the claims 1 to 3,
**characterized in that**
the thickness (D) of the membrane (23) decreases from the inside to the outside in the region of the first strain gauge or gauges (27) and increases from the inside to the outside in the region of the second strain gauge or gauges (27).

6. A load cell in accordance with at least one of the preceding claims, **characterized in that**
the plurality of strain gauges (27) each have a measurement grid oriented in the radial direction.

7. A load cell in accordance with at least one of the preceding claims,
**characterized in that**
one first and one second strain gauge (27) are respectively arranged on two mutually oppositely disposed sides of the force introduction element (21).

8. A load cell in accordance with claim 8,
**characterized in that**
the membrane (23) is provided in a central region with a peripheral annular web (29) at the upper side.

9. A load cell in accordance with at least one of the preceding claims,
**characterized in that**
the load cell (13) comprises an evaluation circuit (41) which is electrically connected to the strain gauges (27) and which is configured to generate an output signal corresponding to a weight acting on the force introduction element, with an external interface (43) preferably being provided which is electrically connected to the evaluation circuit (41) and which is configured to output the output signal generated by the evaluation circuit (41) to external.

10. A load cell in accordance with at least one of the preceding claims,
**characterized in that**
the force introduction element (21) is configured as a force introduction pipe (21); and/or **in that** the spring body (17) is configured in monolithic form.

11. A weighing foot (11) having a load cell (13) in accordance with any one of the preceding claims.

12. A weighing foot in accordance with claim 11,
**characterized in that**
the force introduction element (21) has an external thread at its upper end.

13. A weighing foot in accordance with claim 11 or claim 12,
**characterized in that**
the weighing foot (11) comprises a lower part (15) on which the outer support ring (19) of the load cell (13) is supported, with the lower part (15) preferably hermetically tightly sealing the deformation section (23) downwardly.

14. A weighing system having a plurality of weighing feet (11), in particular two or four weighing feet (11), in each case in accordance with any one of the preceding claims 11 to 13, and having a load carrier (33, 39) supported on the plurality of weighing feet (11).

## Revendications

1. Cellule de pesage (13) comprenant
un corps élastique (17) réalisé à symétrie de révolution autour d'un axe central (A) et ayant une bague de palier extérieure (19), un élément intérieur d'introduction de force (21) faisant saillie vers le haut, et une portion de déformation annulaire (23) qui est réalisée comme membrane en forme d'anneau circulaire (23) et par laquelle la bague de palier (19) et l'élément d'introduction de force (21) sont solidaires l'un de l'autre, et
plusieurs jauges de contrainte (27) disposées sur une face inférieure de la membrane (23) pour détecter une déformation d'étirement et/ou de compression du corps élastique (17), les jauges de contrainte (27) étant connectées électriquement pour former un pont de mesure de Wheatstone ou une partie de celui-ci,
dans laquelle
au moins une première jauge de contrainte (27), en particulier deux premières jauges de contrainte (27), se trouve(nt) sur un premier cercle (53) avec un premier rayon (R1) autour de l'axe central (A) du corps élastique (17), et au moins une deuxième jauge de contrainte (27), en particulier deux deuxièmes jauges de contrainte (27), se trouve(nt) sur un deuxième cercle (55) avec un deuxième rayon (R2), supérieur au premier rayon (R1), autour de l'axe central (A) du corps élastique (17),
l'épaisseur moyenne (D) de la membrane en forme d'anneau circulaire (23) au niveau de la ou des premières jauges de contrainte (27) est supérieure à l'épaisseur moyenne au niveau de la ou des deuxièmes jauges de contrainte (27),
**caractérisée en ce que**
les deux premières jauges de contrainte (27) sont disposées le long d'une première ligne passant par l'axe central (A) du corps élastique (17), et les deux deuxièmes jauges de contrainte (27) sont disposées le long d'une deuxième ligne passant par l'axe central (A) du corps élastique (17), les deux lignes étant tournées l'une par rapport à l'autre d'un angle de 5° à 20°.

2. Cellule de pesage selon la revendication 1,
**caractérisée en ce que**
la membrane en forme d'anneau circulaire (23) est plane sur sa face inférieure et/ou présente un tracé arrondi, en particulier respectivement sur sa face supérieure dans sa zone de transition vers la bague de palier extérieure (19) et/ou dans sa zone de transition vers l'élément intérieur d'introduction de force (21).

3. Cellule de pesage selon la revendication 1 ou 2,
**caractérisée en ce que**
l'élément intérieur d'introduction de force (21) présente une contre-dépouille (59) à son extrémité inférieure.

4. Cellule de pesage selon l'une au moins des revendications précédentes, **caractérisée en ce que**
l'épaisseur (D) de la membrane (23) est réalisée de manière à diminuer de manière monotone de l'intérieur vers l'extérieur, en particulier de manière linéaire ou par paliers.

5. Cellule de pesage selon l'une au moins des revendications 1 à 3, **caractérisée en ce que**
l'épaisseur (D) de la membrane (23) diminue de l'intérieur vers l'extérieur dans la zone de la ou des premières jauges de contrainte (27) et augmente de l'intérieur vers l'extérieur dans la zone de la ou des deuxièmes jauges de contrainte (27).

6. Cellule de pesage selon l'une au moins des revendications précédentes, **caractérisée en ce que**
lesdites plusieurs jauges de contrainte (27) présentent chacune une grille de mesure orientée dans la direction radiale.

7. Cellule de pesage selon l'une au moins des revendications précédentes, **caractérisée en ce que**
une première et une deuxième jauge de contrainte (27) respectives sont disposées sur deux côtés opposés de l'élément d'introduction de force (21).

8. Cellule de pesage selon l'une au moins des revendications précédentes, **caractérisée en ce que**
la membrane (23) est munie sur sa face supérieure, dans une zone centrale, d'une barrette annulaire périphérique (29).

9. Cellule de pesage selon l'une au moins des revendications précédentes, **caractérisée en ce que**
la cellule de pesage (13) comprend un circuit d'évaluation (41) relié électriquement aux jauges de contrainte (27), qui est réalisé pour générer un signal de sortie correspondant à un poids agissant sur l'élément d'introduction de force, et de préférence, il est prévu une interface externe (43) reliée électriquement au circuit d'évaluation (41), qui est réalisée pour émettre vers l'extérieur le signal de sortie généré par le circuit d'évaluation (41).

10. Cellule de pesage selon l'une au moins des revendications précédentes, **caractérisée en ce que**
l'élément d'introduction de force (21) est réalisé sous la forme d'un tube d'introduction de force (21) et/ou le corps élastique (17) est réalisé de manière monolithique.

11. Pied de pesée (11) comportant une cellule de pesage (13) selon l'une des revendications précédentes.

12. Pied de pesée selon la revendication 11,
**caractérisé en ce que**
l'élément d'introduction de force (21) présente un filetage extérieur à son extrémité supérieure.

13. Pied de pesée selon la revendication 11 ou 12,
**caractérisé en ce que**
le pied de pesée (11) comprend une partie inférieure (15) sur laquelle s'appuie la bague de palier extérieure (19) de la cellule de pesage (13), de préférence la partie inférieure (15) refermant hermétiquement la portion de déformation (23) vers le bas.

14. Système de pesage comportant plusieurs pieds de pesée (11), en particulier deux ou quatre, chacun selon l'une des revendications précédentes 11 à 13, et comportant un porte-charge (33, 39) prenant appui sur lesdits plusieurs pieds de pesée (11).
